# DEMANDE DE BREVET EUROPEEN

(11) **EP 4 793 106 A1**
(43) Date de publication de la demande: **19.08.2026**
(21) Numéro de dépôt: 26153006.7
(22) Date de dépôt: 20.01.2026
(51) Int. Cl.: B60R 19/18

(54) **POUTRE TRANSVERSALE ARRIÈRE À MOMENT QUADRATIQUE MODIFIÉ, POUR UN VÉHICULE TERRESTRE**

(30) Priorité: 13.02.2025 FR 2501493
(71) Demandeur: Stellantis Auto SAS, 78300 Poissy (FR)
(72) Inventeur: MAURICE, SEBASTIEN, 25360 GONSANS (FR); THOR, TOU, 25150 PONT DE ROIDE VERMONDANS (FR); BESSETTE, DAMIEN, 25150 ECOT (FR); BORNIER, PAUL, 70400 LUZE (FR); MAGAS, MIHAELA MARIA, 90800 ARGIESANS (FR); LE NORCY, YOHANN, 90400 DANJOUTIN (FR)
(74) Mandataire: BCIP

(57) **Abrégé**

Une poutre transversale (PTR) équipe une extrémité arrière d'un véhicule terrestre (V) et comprend des sous-parties inférieure (SPI1) et supérieure (SPS) ayant des sections transverses de forme générale rectangulaire, et une sous-partie intermédiaire (SPI2) reliant entre elles ces sous-parties inférieure (SPI1) et supérieure (SPS) au niveau d'une zone arrière (ZR). Cette sous-partie intermédiaire (SPI2) est entièrement située dans une moitié inférieure (MIP) de la poutre transversale (PTR), contenant également la sous-partie inférieure (SPI1), afin d'être placée en face d'une poutre de test (PTT) lors d'un test d'impact réglementé subi par le véhicule terrestre (V).

## Description

### Domaine technique de l'invention

L'invention concerne les véhicules terrestres, et plus précisément les poutres transversales qui sont destinées à équiper les extrémités arrière de tels véhicules.

### Etat de la technique

Certains véhicules terrestres, généralement de type automobile, comprennent une extrémité arrière comportant une poutre transversale arrière habituellement masquée par un pare-chocs (ou bouclier) arrière et destinée à participer à l'absorption d'une partie au moins des chocs arrière (généralement en combinaison avec un absorbeur voisin). En fait, cette poutre transversale arrière doit être en capacité d'absorber (avec l'absorbeur associé), par déformation, un choc arrière à faible vitesse (typiquement inférieure à 15 km/h) afin de limiter (voir d'éviter) l'endommagement d'autres équipements ou sous-parties de son véhicule (terrestre). Ce type de choc arrière est de ce fait généralement dit « de réparabilité », du fait qu'il permet la réparation du véhicule pour un coût relativement faible.

Afin de tester la capacité d'absorption des chocs arrière de réparabilité par la poutre transversale arrière et l'absorbeur associé d'un véhicule, on soumet ces poutres transversales arrière et absorbeur associé à un test d'impact réglementé, comme par exemple celui appelé RCAR (« Research Council for Automobile Repair »). Il est rappelé qu'un tel test d'impact consiste à projeter à une vitesse prédéfinie (par exemple 10 ou 15 km/h) une poutre de test contre la poutre transversale arrière et l'absorbeur associé.

Dans certains types de véhicule, comme par exemple ceux ayant un châssis surélevé, lors du test d'impact une partie importante de la poutre transversale arrière se retrouve placée au-dessus de la poutre de test. Or, du fait que la poutre transversale arrière comprend, d'une part, des sous-parties inférieure et supérieure ayant des sections transverses de formes générales rectangulaires sensiblement identiques, et, d'autre part, une sous-partie intermédiaire qui relie entre elles ces sous-parties inférieure et supérieure au niveau d'une zone arrière, sa sous-partie intermédiaire se retrouve placée, tout comme sa zone de stabilité, au moins partiellement au-dessus de la poutre de test. Par conséquent, lors de l'impact cette sous-partie supérieure passe au-dessus de la poutre de test, ce qui empêche la poutre transversale arrière d'assurer correctement sa fonction d'absorption de l'impact, alors même que la hauteur de recouvrement entre la poutre transversale arrière et la poutre de test est réglementaire. De ce fait, lors d'un choc arrière de réparabilité, le coût de la réparation du véhicule risque d'être élevé.

L'invention a donc notamment pour but d'améliorer la situation.

### Présentation de l'invention

Elle propose notamment à cet effet une poutre transversale propre à équiper une extrémité arrière d'un véhicule terrestre et comprenant, d'une part, des sous-parties inférieure et supérieure ayant des sections transverses de forme générale rectangulaire, et, d'autre part, une sous-partie intermédiaire reliant entre elles ces sous-parties inférieure et supérieure au niveau d'une zone arrière.

Cette poutre transversale se caractérise par le fait que sa sous-partie intermédiaire est entièrement située dans une moitié inférieure qu'elle comprend, et qui contient également sa sous-partie inférieure, afin d'être placée en face d'une poutre de test lors d'un test d'impact réglementé subi par le véhicule terrestre.

Ainsi, le moment quadratique de la poutre transversale (parfois appelé abusivement « moment d'inertie » ou encore « inertie ») est modifié par rapport à celui d'une poutre transversale de l'art antérieur, ce qui permet de déplacer vers le bas sa zone de stabilité, et donc, lors de l'impact d'une poutre de test, la sous-partie supérieure ne risque plus de passer au-dessus de cette poutre de test, ce qui permet à la poutre transversale d'assurer correctement sa fonction d'absorption de l'impact lors d'un choc arrière de réparabilité.

La poutre transversale selon l'invention peut comporter d'autres caractéristiques qui peuvent être prises séparément ou en combinaison, et notamment :
- sa sous-partie supérieure peut avoir une première extension suivant une direction verticale qui est strictement supérieure à une deuxième extension de sa sous-partie inférieure suivant cette direction verticale ;
- en présence de la première option, la première extension peut être supérieure ou égale à une somme de la deuxième extension et d'une troisième extension de la sous-partie intermédiaire suivant la direction verticale ;
- elle peut avoir une portion comportant au moins ses sous-parties inférieure et intermédiaire et destinée à être placée en face de la poutre de test en ayant une quatrième extension suivant la direction verticale supérieure ou égale à 75 mm ;
- elle peut être réalisée par façonnage et soudage d'une tôle en acier.

L'invention propose également un véhicule terrestre, éventuellement de type automobile, et comprenant une extrémité arrière comportant une poutre transversale du type de celle présentée ci-avant.

Par exemple, dans ce véhicule terrestre la poutre transversale peut être installée à une hauteur, par rapport à une surface qui le supporte, choisie de sorte que sa sous-partie inférieure soit placée en face d'une poutre de test lors d'un test d'impact réglementé.

Egalement par exemple, dans ce véhicule terrestre la poutre transversale peut être installée à une hauteur, par rapport à une surface qui le supporte, choisie de sorte qu'elle comporte une portion comprenant au moins les sous-parties inférieure et intermédiaire et destinée à être placée en face de la poutre de test en ayant une quatrième extension suivant la direction verticale supérieure ou égale à 75 mm.

### Brève description des figures

D'autres caractéristiques et avantages de l'invention apparaîtront à l'examen de la description détaillée ci-après, et des dessins annexés (obtenus en CAO/DAO (« Conception Assistée par Ordinateur/Dessin Assisté par Ordinateur »), sur lesquels :
[Fig. 1] illustre schématiquement, dans une vue en perspective du côté arrière, une partie d'un exemple de structure d'un véhicule terrestre comportant un exemple de réalisation d'une poutre transversale arrière selon l'invention, et
[Fig. 2] illustre schématiquement et fonctionnellement, dans une vue en coupe dans un plan longitudinal et vertical, la partie de structure de la figure 1, avec la matérialisation d'un bouclier arrière, d'un absorbeur et d'une poutre de test.

### Description détaillée de l'invention

L'invention a notamment pour but de proposer une poutre transversale arrière PTR destinée à être installée dans une extrémité arrière d'un véhicule terrestre V, et ayant un moment quadratique modifié de manière à être en capacité d'absorber correctement, par déformation, un choc arrière de réparabilité subi par cette extrémité arrière.

Dans ce qui suit, on considère, à titre d'exemple non limitatif, que le véhicule terrestre V est de type automobile. Mais l'invention n'est pas limitée à ce type de véhicule terrestre. Elle concerne en effet tout véhicule terrestre comprenant une extrémité arrière devant comporter une poutre transversale arrière.

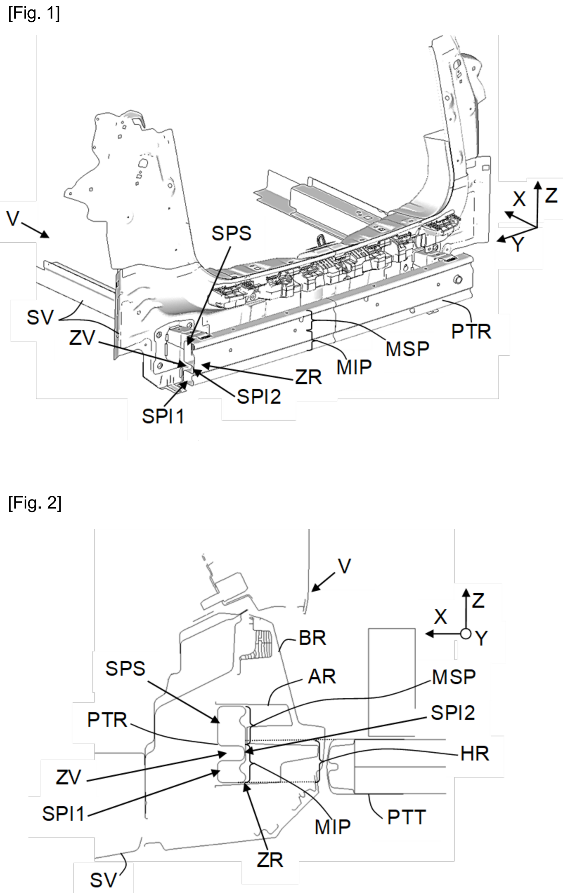

Sur les figures 1 et 2 la direction X est la direction longitudinale du véhicule (terrestre) V, laquelle est sensiblement parallèle aux côtés latéraux (ou longitudinaux) comportant les portières latérales, la direction Y est la direction transversale du véhicule V, laquelle est perpendiculaire à la direction longitudinale X, et la direction Z est la direction verticale du véhicule V, laquelle est perpendiculaire aux directions longitudinale X et transversale Y.

On a schématiquement illustré sur les figures 1 et 2 une partie d'un exemple de structure SV d'un véhicule V comportant, au niveau d'une extrémité arrière, un exemple de réalisation d'une poutre transversale arrière PTR selon l'invention. Comme illustré sur la figure 1, la poutre transversale arrière PTR est couplée à la structure SV. En fait, la poutre transversale arrière PTR est, ici, solidarisée fixement, par exemple par soudage, à des absorbeurs longitudinaux droit et gauche, eux-mêmes solidarisés fixement et respectivement à des platines droite et gauche, par exemple par soudage. Ces platines droite et gauche sont solidarisées fixement, par exemple par vissage, à la structure SV.

On notera que dans l'exemple illustré non limitativement sur la figure 2 la poutre transversale arrière PTR est masquée par un pare-chocs (et plus précisément ici un bouclier) arrière BR, et un absorbeur AR dit « de réparabilité » est solidarisé à elle (PTR) en étant intercalé entre elle (PTR) et le bouclier arrière BR. Cet absorbeur de réparabilité AR et cette poutre transversale arrière PTR sont destinés à participer ensemble à l'absorption d'une partie au moins d'un choc de réparabilité arrière subi par le bouclier arrière BR (et donc par l'extrémité arrière du véhicule V).

Comme illustré au moins partiellement sur les figures 1 et 2, la poutre transversale (arrière) PTR comprend des sous-parties inférieure SPI1 et supérieure SPS et une sous-partie intermédiaire SPI2.

La sous-partie intermédiaire SPI2 relie entre elles les sous-parties inférieure SPI1 et supérieure SPS au niveau d'une zone arrière ZR (c'est-à-dire orientée vers le bouclier arrière BR). Cela signifie que la zone ZV située entre les sous-parties inférieure SPI1 et supérieure SPS, en amont de la sous-partie intermédiaire SPI2, est vide. En d'autres termes, la sous-partie intermédiaire SPI2 est constituée par une portion de paroi installée sensiblement dans un plan YZ, ou bien par deux portions de paroi installées sensiblement dans des plans YZ, et l'une contre l'autre (en étant éventuellement soudées entre elles).

Chacune des sous-parties inférieure SPI1 et supérieure SPS a une section transverse (dans un plan XZ) de forme générale rectangulaire.

De plus, la sous-partie intermédiaire SPI2 est entièrement située dans une moitié inférieure MIP de la poutre transversale PTR qui contient également la sous-partie inférieure SPI1. Cet agencement particulier permet avantageusement de placer la sous-partie intermédiaire SPI2 en face d'une poutre de test PTT lors d'un test d'impact réglementé subi par le véhicule V au niveau de son extrémité arrière. On comprendra que la poutre transversale PTR est installée à une hauteur, par rapport à une surface supportant le véhicule V, qui permet que sa sous-partie intermédiaire SPI2 soit placée en face de la poutre de test PTT.

On entend ici par « en face de » le fait d'être intégralement situé dans un intervalle vertical (suivant la direction verticale Z) qui est entièrement inclus dans l'intervalle vertical où est destiné à être placée la poutre de test PTT lors d'un test d'impact réglementé.

Par ailleurs, on entend ici par « test d'impact réglementé » un test consistant à projeter la poutre de test PTT (placée à une hauteur prédéfinie) contre la poutre transversale PTR et l'absorbeur AR associé à une vitesse prédéfinie (par exemple 10 ou 15 km/h). Par exemple, ce test d'impact réglementé peut être celui qui est appelé RCAR (Research Council for Automobile Repair).

La sous-partie intermédiaire SPI2 étant désormais entièrement placée en face de la poutre de test PTT, et non plus placée au moins partiellement au-dessus de la poutre de test PTT comme dans une poutre transversale de l'art antérieur, le moment quadratique (en m⁴) de la poutre transversale PTR (ici suivant la direction longitudinale X) est donc modifié par rapport à celui d'une poutre transversale de l'art antérieur. En fait, la modification du moment quadratique (résultant de la modification de la forme de la section transverse de la poutre transversale PTR) permet de déplacer vers le bas, et plus précisément dans sa moitié inférieure MIP, la zone de stabilité de cette poutre transversale PTR par rapport à l'endroit où est placée celle d'une poutre transversale de l'art antérieur. Par conséquent, lors de l'impact d'une poutre de test PTT, la sous-partie supérieure SPS ne risque plus de passer au-dessus de cette poutre de test PTT, ce qui permet à la poutre transversale PTR d'assurer correctement sa fonction d'absorption de l'impact, et ainsi d'avoir un coût de réparation du véhicule V faible et maîtrisé lors d'un choc arrière de réparabilité.

Par exemple, la modification du moment quadratique de la poutre transversale PTR peut permettre de déplacer vers le bas, et plus précisément dans sa moitié inférieure MIP, la zone de stabilité de cette poutre transversale PTR sur une hauteur supérieure à 25 mm, et de préférence supérieure ou égale à 27 mm.

Egalement par exemple, la poutre transversale PTR peut être réalisée par façonnage et soudage d'une tôle en acier (ou dans un autre métal).

Egalement par exemple, et comme illustré non limitativement sur les figures 1 et 2, la sous-partie supérieure SPS peut avoir une première extension verticale (suivant la direction verticale Z) qui est strictement supérieure à une deuxième extension verticale (suivant la direction verticale Z) de la sous-partie inférieure SPI1. La section transverse (dans un plan XZ) de la poutre transversale PTR n'est donc plus symétrique par rapport à une direction parallèle à la direction longitudinale X et passant sensiblement par le milieu de la hauteur de la poutre transversale PTR.

Egalement par exemple, et comme illustré non limitativement sur les figures 1 et 2, la première extension verticale peut être supérieure ou égale à la somme de la deuxième extension verticale et d'une troisième extension verticale de la sous-partie intermédiaire SPI2 suivant la direction verticale Z. En d'autres termes, la sous-partie supérieure SPS s'étend verticalement dans l'intégralité de la moitié supérieure MSP de la poutre transversale PTR ainsi que dans une petite partie de la moitié inférieure MIP de la poutre transversale PTR. Mais cela n'est pas obligatoire.

On notera également que dans l'exemple illustré non limitativement sur les figures 1 et 2 la sous-partie intermédiaire SPI2 à une hauteur qui est réduite par rapport à celle d'une sous-partie intermédiaire d'une poutre transversale de l'art antérieur, afin que la hauteur de la sous-partie inférieure SPI1 ne soit pas réduite (ou seulement très faiblement) par rapport à celle d'une sous-partie inférieure d'une poutre transversale de l'art antérieur pour ne pas modifier significativement sa capacité d'absorption lors d'un choc de réparabilité.

Egalement par exemple, et comme illustré non limitativement sur les figures 1 et 2, la poutre transversale PTR peut avoir une portion qui comporte au moins les sous-parties inférieure SPI1 et intermédiaire SPI2 et qui est destinée à être placée en face de la poutre de test PTT en ayant une quatrième extension verticale HR (suivant la direction verticale Z) supérieure ou égale à 75 mm. Cette quatrième extension verticale HR est ce que l'on appelle la hauteur de recouvrement HR de la poutre transversale PTR avec la poutre de test PTT dans un test d'impact réglementé. On comprendra que la poutre transversale PTR est installée à une hauteur, par rapport à la surface supportant le véhicule V, qui permet à sa portion précitée de présenter cette hauteur de recouvrement HR avec la poutre de test PTT.

## Revendications

1. Poutre transversale (PTR) propre à équiper une extrémité arrière d'un véhicule terrestre (V) et comprenant i) des sous-parties inférieure (SPI1) et supérieure (SPS) ayant des sections transverses de forme générale rectangulaire, et ii) une sous-partie intermédiaire (SPI2) reliant entre elles lesdites sous-parties inférieure (SPI1) et supérieure (SPS) au niveau d'une zone arrière (ZR), **caractérisée en ce que** ladite sous-partie intermédiaire (SPI2) est entièrement située dans une moitié inférieure (MIP) de ladite poutre transversale (PTR), contenant également ladite sous-partie inférieure (SPI1), afin d'être placée en face d'une poutre de test (PTT) lors d'un test d'impact réglementé subi par ledit véhicule terrestre (V).

2. Poutre transversale selon la revendication 1, **caractérisée en ce que** ladite sous-partie supérieure (SPS) a une première extension suivant une direction verticale strictement supérieure à une deuxième extension de ladite sous-partie inférieure (SPI1) suivant cette direction verticale.

3. Poutre transversale selon la revendication 2, **caractérisée en ce que** ladite première extension est supérieure ou égale à une somme de ladite deuxième extension et d'une troisième extension de ladite sous-partie intermédiaire (SPI2) suivant ladite direction verticale.

4. Poutre transversale selon l'une des revendications 1 à 3, **caractérisée en ce qu'**elle a une portion comportant au moins lesdites sous-parties inférieure (SPI1) et intermédiaire (SPI2) et destinée à être placée en face de ladite poutre de test (PTT) en ayant une quatrième extension suivant ladite direction verticale supérieure ou égale à 75 mm.

5. Poutre transversale selon l'une des revendications 1 à 4, **caractérisée en ce qu'**elle est réalisée par façonnage et soudage d'une tôle en acier.

6. Véhicule terrestre (V), **caractérisé en ce qu'**il comprend une extrémité arrière comportant une poutre transversale (PTR) selon l'une des revendications 1 à 5.

7. Véhicule terrestre selon la revendication 6, **caractérisé en ce que** ladite poutre transversale (PTR) est installée à une hauteur, par rapport à une surface supportant ledit véhicule terrestre (V), choisie de sorte que sa sous-partie inférieure (SPI1) soit placée en face d'une poutre de test (PTT) lors d'un test d'impact réglementé.

8. Véhicule terrestre selon la revendication 6 ou 7, **caractérisé en ce que** ladite poutre transversale (PTR) est installée à une hauteur, par rapport à une surface supportant ledit véhicule terrestre (V), choisie de sorte qu'elle comporte une portion comprenant au moins lesdites sous-parties inférieure (SPI1) et intermédiaire (SPI2) et destinée à être placée en face de ladite poutre de test (PTT) en ayant une quatrième extension suivant ladite direction verticale supérieure ou égale à 75 mm.

9. Véhicule terrestre selon l'une des revendications 6 à 8, **caractérisé en ce qu'**il est de type automobile.
